# EUROPEAN PATENT APPLICATION

(11) **EP 0 727 467 A2**
(43) Date of publication of application: **21.08.1996**
(21) Application number: 95104584.8
(22) Date of filing: 28.03.1995
(51) Int. Cl.: C09D 11/16

(54) **Ink compositions for blackboard and processes for preparing the compositions**

(30) Priority: 16.02.1995 US 389242
(71) Applicant: Lee, Kye-kap, Kangnam-ku, Seoul (KR)
(72) Inventor: Lee, Kye-kap, Kangnam-ku, Seoul (KR)
(74) Representative: Hering, Hartmut, Dipl.-Ing.

(57) **Abstract**

The ink composition of the present invention comprises of 9∼12 % by weight of titanium dioxide, 0.9∼1.2 % by weight of calcium carbonate, 1.8∼2.2 % by weight of vinyl resin, 30∼40 % by weight of isopropyl alcohol, 8∼11 % by weight of isooctyl stearate, 2.8∼3.2 % by weight of polyoxyethylene lauryl ether, 0.8∼1.2 % by weight of polyoxyethylene oleylcetyl ether, 30∼40 % by weight of ethyl alcohol, and 7∼8.5 % by weight of dioctyl adipate.

The process of preparing the ink composition comprises of (1) dissolving vinyl resin (powder form) in a solvent of isopropyl alcohol, (2) adding titanium dioxide and calcium carbonate to the above solution, (3) milling the particles in the above solution to the size below 1 µ, and (4) mixing isooctyl stearate, polyoxyethylene lauryl ether, polyoxyethylene oleylcetyl ether, ethyl alcohol, and dioctyl adipate in the above solution.

## Description

The present invention relates to ink compositions and processes of preparing the ink compositions of writing utensils for greenboards which are coated with a certain ceramic paint.

The blackboard for classrooms, seminar rooms, conference rooms, offices, etc. has a black color or green color on the surface. A chalk has been used for writing on the blackboard or greenboard. These days, however, traditionally used black colored boards have been replaced by green colored boards because greenboards provide less strain on human eyes.

When a chalk is used for blackboard or greenboard in classrooms, the chalk tends to cause various problems. For example, when an eraser erases the written material on a greenboard, the chalk powder tends to fly in the classroom. Moreover, shaking the chalk powder off from the eraser causes more powder to release into the air. The chalk powder thus pollutes the atmosphere in the classrooms and causes a health problem to teachers and students. To solve this problem, various researches have been conducted to develop a better product, but to no avail.

The whiteboard, painted with synthetic resin materials was developed to replace the traditional blackboard with its inherent chalk dust problem. The marker pen for the whiteboard which is typically black, blue, or red color, does solve the problem. However, when the marker pen is used on the whiteboard, the board tends to reflect light, causing new problem, strain on eye. Therefore, the use of the whiteboard and marker pen tends to be more appropriate for and has been limited to office setting --requiring shorter and infrequent uses -- rather than in school classroom setting -- demanding longer and constant use.

Two patents related to ink composition for whiteboard have already been filed. U.S. Patent No. 4,960,464 discloses an erasable ink composition consisting of a graphite powder, a lubricating oil, oleic acid extracted from vegetable oil, ethylene glycol and ferrous sulfate. U.S. Patent No. 5,024,700 discloses an ink composition comprising solvent petroleum-based ink solvent, naphthenic ink oil, hydrocarbon resin(s), petroleum-process oil, oil-based carbon black, aluminum gellant and triethanolamine. These ink compositions, however, cannot be applied to green or blackboards.

To fully resolve the above mentioned problems, the present inventor developed a greenboard coated with a ceramic paint("greenboard"), and the ink composition -- white in color --to be used with the greenboard.

The ink composition of the present invention can be filled and refilled in a marker pen casing with a nip.

An object of the present invention is to provide a white ink composition with no dusting problem associated with a chalk.

Another object of the invention is to provide a white ink composition which can be cleanly erased with the eraser when applied to the greenboard.

A further object of the invention is to provide a white ink composition which does not cause a diffused reflection, when used on the greenboard.

A further object of the invention is to provide a white ink composition applicable to other board surfaces that fail to readily absorb other ink compositions, such as glass, metal or ceramic board.

A further object of the invention is to provide a white ink composition which can be filled in a marker pen that has a nip.

The ink composition of the present invention comprises of 9∼12 % by weight of titanium dioxide, 0.9∼1.2 % by weight of calcium carbonate, 1.8∼2.2 % by weight of vinyl resin, 30∼40 % by weight of isopropyl alcohol, 8∼11 % by weight of isooctyl stearate, 2.8∼3.2 % by weight of polyoxyethylene lauryl ether, 0.8∼1.2 % by weight of polyoxyethylene oleylcetyl ether, 30∼40 % by weight of ethyl alcohol, and 7∼8.5 % by weight of dioctyl adipate.

The process of preparing the ink composition comprises of (1) dissolving vinyl resin (powder form) in a solvent of isopropyl alcohol, (2) adding titanium dioxide and calcium carbonate to the above solution, (3) milling the particles in the above solution to the size below 1 µ, and (4) mixing isooctyl stearate, polyoxyethylene lauryl ether, polyoxyethylene oleylcetyl ether, ethyl alcohol, and dioctyl adipate in the above solution.

The ink composition of the present invention comprises of titanium dioxide, calcium carbonate, vinyl resin, isopropyl alcohol, isooctyl stearate, polyoxyethylene lauryl ether, polyoxyethylene oleylcetyl ether, ethyl alcohol, and dioctyl adipate.

The titanium dioxide is a white pigment as coloring agent which is in a form of powder. The titanium dioxide provides an ink composition with a white color. About 9∼12 % by weight of the titanium dioxide is used in the ink composition.

The calcium carbonate, an additive, white powder coloring agent, contributes in turning the ink composition into white color. About 0.9∼1.2 % by weight of the calcium carbonate is used in the ink composition.

The vinyl resin is used to form a coated layer, when the ink composition is applied on the surface of the blackboard. The vinyl resin is a polymeric material in a form of powder. About 1.8∼2.2 % by weight of the vinyl resin is added to the ink composition. The vinyl resin is dissolved in a solvent of isopropyl alcohol.

First, the isopropyl alcohol, a solvent, is used to dissolve the vinyl resin. Second, the resulting solution is used to dissolve titanium dioxide and calcium carbonate. Then isooctyl stearate, polyoxyethylene lauryl ether, polyoxyehtylene oleylcetyl ether, and dioctyl adipate are mixed with the dissolved solution. About 30∼ 40 % by weight of isopropyl alcohol is used in the ink composition.

Isooctyl stearate, polyoxyethylene lauryl ether, and polyoxyethylene oleylcetyl ether are added to the ink composition as separating agent, also called as a carrier. This agent, with its "separating property" helps to erase the ink composition off the board. 8∼11 % by weight of isooctyl stearate, 2.8∼3.2 % by weight of polyoxyethylene lauryl ether, and 0.8∼1.2 % by weight of polyoxyethylene oleylcetyl ether are added to the ink composition.

The dioctyl adipate is used as plasticizer. The ink composition is solidified as soon as the ink composition is applied onto the surface of the blackboard. 7∼8.5 % by weight of dioctyl adipate is added to the ink composition.

The ethyl alcohol is used to dissolve all the ingredients of this ink composition. The ethyl alcohol is vaporized as soon as the ink composition is applied onto the surface of the blackboard. About 30∼40 % by weight of ethyl alcohol is used in the ink composition.

The ink composition according to the present invention is prepared by dissolving vinyl resin in a solvent of isopropyl alcohol, adding titanium dioxide and calcium carbonate to the above solution, milling the particles in the above solution to the size less than 1 µ, and mixing isooctyl stearate, polyoxyethylene lauryl ether, polyoxyethylene oleylcetyl ether, ethyl alcohol, and dioctyl adipate with the milled solution.

In the milling of the present process, the particle size should be less than 1.0 µ, preferably ranging from 0.5 to 1.0 µ. The solution consisting of vinyl resin, titanium dioxide, calcium carbonate, and isopropyl alcohol is milled with a conventional milling machine popular in the industry.

The ink composition of the present invention can be filled and refilled in a marker pen. The marker pen will produce white color mark when used on surfaces of blackboard, glass board, metal board and ceramic board. The ink will cause no dust problem and can be easily cleaned off with eraser.

The present invention may be better understood through the examples intended for the purpose of illustration. This however should not misconstrued as in any way limiting the scope of the invention.

### Examples 1∼10

As shown in Table 1, ink compositions in Examples 1∼10 were prepared in accordance with the specified amounts. Vinyl resin was dissolved in isopropyl alcohol. Titanium dioxide and calcium carbonate were added to the solution. The resulting solution was milled with a conventional mill to reduce the particle size to less than 1.0 µ. Isooctyl stearate, polyoxyethylene lauryl ether, polyoxyethylene oleylcetyl ether, ethyl alcohol, and dioctyl adipate were mixed with the milled solution.

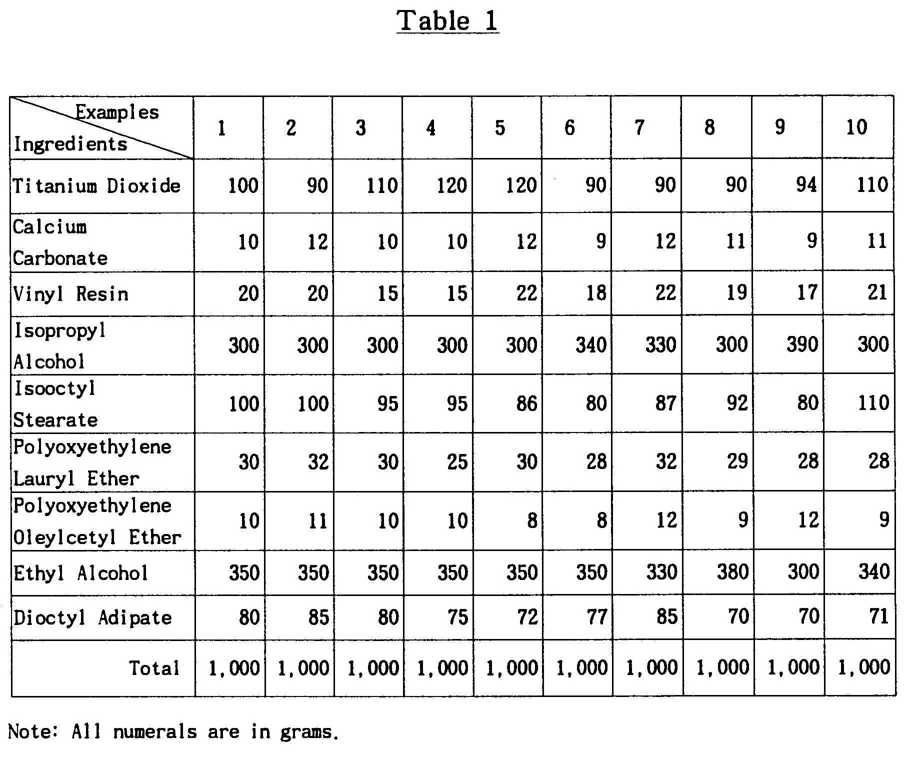

The result from the above 10 cases were very satisfactory. The marks, made by the markers with different compositions, were erased easily with an eraser, producing no chalk dust, leaving only rubberlike residue, which was similar to the residue left after erasure by a pencil eraser.

## Claims

1. An ink composition for blackboard which comprises of:
9∼12 % by weight of titanium dioxide;
0.9∼1.2 % by weight of calcium carbonate;
1.8∼2.2 % by weight of vinyl resin;
30∼40 % by weight of isopropyl alcohol;
8∼11 % by weight of isooctyl strearate;
2.8∼3.2 % by weight of polyoxyethylene lauryl ether;
0.8∼1.2 % by weight of polyoxyethylene oleylcetyl ether;
30∼40 % by weight of ethyl alcohol; and
7∼8.5 % by weight of dioctyl adipate.

2. The ink composition defined in claim 1 wherein the size of the particle of said titanium dioxide, calcium carbonate, and vinyl resin is less than 1.0 µ.

3. The ink composition defined in claim 2 wherein said size is in the range of 0.5∼1.0 µ.

4. A process of preparing an ink composition for blackboard, which comprises of:
dissolving 1.8∼2.2 % by weight of vinyl resin in 30∼40 % by weight of isopropyl alcohol per 100 % by weight of the ink composition;
adding 9∼12 % by weight of titanium dioxide and 0.9∼1.2 % by weight of calcium carbonate to the above solution;
milling the resulting solution with a mill so that the particle size is less than 1.0 µ; and
mixing 8∼11 % by weight of isooctyl strearate, 2.8∼3.2 % by weight of polyoxyethylene lauryl ether, 0.8∼1.2 % by weight of polyoxyethylene oleylcetyl ether, 30∼40 % by weight of ethyl alcohol, and 7∼8.5 % by weight of dioctyl adipate with the milled solution.

5. The process defined in claim 4 wherein said particle size is in the range of 0.5∼1.0 µ.
